# DEMANDE DE BREVET EUROPEEN

(11) **EP 4 047 623 A1**
(43) Date de publication de la demande: **24.08.2022**
(21) Numéro de dépôt: 22156893.4
(22) Date de dépôt: 15.02.2022
(51) Int. Cl.: H01B 7/295, H01B 3/14, H01B 13/30, B28B 3/26, B28B 19/00

(54) **DISPOSITIF D'IMPRÉGNATION POUR LA FABRICATION D'UN CÂBLE RÉSISTANT ET/OU RETARDANT AU FEU COMPRENANT UN REVÊTEMENT COMPOSITE GÉOPOLYMÈRE**

(30) Priorité: 17.02.2021 FR 2101530
(71) Demandeur: Nexans, 92400 Courbevoie (FR)
(72) Inventeur: AUVRAY, Thierry, 69006 LYON (FR); GYPPAZ, Franck, 69003 LYON (FR)
(74) Mandataire: Ipsilon

(57) **Abrégé**

La présente invention concerne un dispositif adapté pour l'imprégnation d'une composition géopolymère sur un matériau fibreux revêtant un cœur de câble, comprenant :
- des moyens assurant le guidage et le défilement du cœur de câble revêtu de matériau fibreux au sein du dispositif, depuis une entrée jusqu'à une sortie du dispositif ; et
- entre ladite entrée et ladite sortie, une chambre d'enduction munie d'au moins un canal d'alimentation en composition géopolymère relié à des moyens d'injection de composition géopolymère dans ladite chambre en continu et avec un débit contrôlé.

## Description

La présente invention a trait à la fabrication de câbles comprenant au moins un élément électriquement conducteur allongé et au moins une couche composite entourant ledit élément électriquement conducteur allongé, ladite couche composite étant obtenue par imprégnation d'un matériau fibreux non tissé par une composition géopolymère. Plus précisément, l'invention concerne un dispositif permettant de contrôler et d'optimiser l'imprégnation du matériau fibreux non tissé par la composition géopolymère.

L'invention s'applique typiquement, mais non exclusivement, à la préparation de câbles retardants et/ou résistants au feu, destinés au transport d'énergie et/ou à la transmission de donnée tels que des câbles électriques et/ou optiques de sécurité retardants et/ou résistants au feu, notamment sans halogène, susceptibles de fonctionner pendant un laps de temps donné dans des conditions d'incendie sans être pour autant propagateur d'incendie, ni générateur de fumées importantes.

Il est connu, notamment de la demande WO 2016/092200, un procédé de préparation d'un câble comprenant au moins un élément électriquement conducteur allongé et au moins une couche composite entourant ledit élément électriquement conducteur allongé, dans lequel (i) on applique un matériau fibreux non tissé, typiquement de structure souple et flexible, autour d'un cœur de câble d'énergie et/ou de télécommunication, ce par quoi on obtient un ensemble cœur de câble/matériau fibreux ; puis (ii) on immerge l'ensemble ainsi obtenu dans une composition géopolymère, ce qui conduit à une imprégnation du matériau fibreux, puis par durcissement de la composition géopolymère, à l'obtention d'un revêtement géopolymère autour du cœur de câble.

Par « cœur de câble », on entend, au sens de la présente description, un élément conducteur allongé ou bien un ensemble de plusieurs éléments conducteurs allongés, éventuellement revêtus, par exemple d'une gaine, ou plus généralement un élément allongé interne, s'entendant généralement sur toute la longueur du câble.

Ainsi, dans les procédés du type de ceux décrits dans la demande WO 2016/092200 précitée, le matériau fibreux non tissé est typiquement appliqué sur un conducteur allongé, un ensemble de conducteurs allongés ou bien sur une couche interne du câble.

Dans ces procédés, l'imprégnation du matériau fibreux est généralement effectuée par une enduction/immersion, typiquement en ligne, en faisant défiler le cœur de câble préalablement revêtu par le matériau fibreux dans une cuve remplie de composition géopolymère liquide. Lorsque la vitesse de défilement du cœur de câble n'est pas trop élevée, ce mode d'imprégnation conduit à une saturation du matériau fibreux en composition géopolymère, cette saturation n'étant pas toujours souhaitable, notamment d'un point de vue économique (l'obtention de propriétés intéressantes n'implique pas nécessairement l'imprégnation d'une quantité aussi importante de composition géopolymère). Dans d'autres cas, à l'inverse, les conditions de mise en aeuvre du procédé impliquent une vitesse de défilement élevée, et l'imprégnation au sein de la cuve peut alors s'avérer insuffisante et/ou inhomogène. Les propriétés finales du revêtement géopolymère autour du cœur de câble sont de ce fait fortement dépendantes de la vitesse de défilement, qui n'est pas toujours un paramètre qu'on peut choisir d'adapter (et qui est bien souvent, au contraire, un paramètre dicté par d'autres contraintes du procédé)

Un but de la présente invention est d'améliorer les procédés d'imprégnation précités, en fournissant des moyens permettant, quelle que soit la vitesse de défilement du cœur de câble, de contrôler la quantité de la composition géopolymère imprégnée sur le matériau fibreux et d'assurer l'homogénéité de l'imprégnation.

A cet effet, la présente invention propose un dispositif d'enduction particulier, qui est doté d'une chambre d'enduction spécifique, au sein de laquelle on fait circuler le cœur de câble revêtu par le matériau fibreux, et qui permet un réglage de la quantité de géopolymère imprégné sur le matériau fibreux, et donc notamment une adaptation de cette quantité de géopolymère imprégné en fonction de la vitesse de défilement du cœur de câble, et une imprégnation homogène de cette composition géopolymère sur le matériau fibreux.

Plus précisément, selon un premier aspect, la présente invention a pour objet un dispositif adapté pour l'imprégnation, de préférence en ligne, d'une composition géopolymère, de préférence aqueuse, sur un matériau fibreux, de préférence non-tissé, revêtant un cœur de câble, comprenant :
- des moyens assurant le guidage et le défilement du cœur de câble revêtu de matériau fibreux au sein du dispositif, depuis une entrée dudit dispositif jusqu'à une sortie dudit dispositif ; et
- entre ladite entrée et ladite sortie, une chambre d'enduction munie d'au moins un canal d'alimentation en composition géopolymère (et en général plusieurs canaux d'alimentation), relié à des moyens permettant l'injection de composition géopolymère dans ladite chambre en continu et avec un débit contrôlé.

Selon un autre aspect, la présente invention a pour objet l'utilisation du dispositif précité pour effectuer l'imprégnation, de préférence en ligne, d'une composition géopolymère, de préférence aqueuse, sur un matériau fibreux, typiquement non tissé, revêtant un cœur de câble.

Dans ce cadre, l'invention a notamment pour objet un procédé de fabrication d'un câble (notamment un câble d'énergie et/ou de télécommunication) comprenant au moins une couche isolante résistant au feu à base d'un matériau composite comprenant au moins un matériau géopolymère et au moins un matériau fibreux, typiquement non tissé, mettant en œuvre le dispositif précité.

Ce procédé de fabrication comprend typiquement :
- une étape d'imprégnation, de préférence en ligne, par une composition géopolymère, de préférence aqueuse, d'un cœur de câble revêtu par un matériau fibreux, de préférence non-tissé,
- une étape de durcissement de la composition géopolymère pour former ladite couche isolante résistante au feu à base dudit matériau composite,
caractérisée en ce que l'étape d'imprégnation est effectuée dans un dispositif d'imprégnation du type précité.

De préférence, la chambre d'enduction du dispositif de l'invention a une géométrie conique, ce qui permet notamment une optimisation de l'imprégnation du matériau fibreux par la composition géopolymère.

Plus précisément, selon un mode avantageux, qui correspond à celui illustré sur les figures jointes, la chambre d'enduction a sensiblement la forme d'un tronc de cône et les moyens de défilement et de guidage assurent alors de préférence un positionnement du cœur de câble au sein de ladite chambre le long de l'axe du tronc de cône formé par la chambre. Typiquement, l'entrée précité du dispositif (permettant l'entrée du cœur de câble avant son séjour dans la chambre) est du côté de la grande base du tronc de cône, et la sortie précitée du dispositif (celle qui permet la sortie du cœur de câble après son séjour dans la chambre) est, à l'inverse, du côté de la petite base dudit tronc de cône, ce qui induit un défilement du cœur de câble depuis la partie la plus évasée de la chambre vers sa partie la plus resserrée, optimisant ainsi encore le contact entre la composition géopolymère et le matériau fibreux à imprégner.

Par ailleurs, il est préférable que le dispositif assure une circulation de la composition géopolymère avec un flux dans le même sens que le défilement que celui du câble, en assurant autant que possible un écoulement laminaire du fluide le long du cœur de câble, ce qui optimise encore l'efficacité de l'imprégnation. A cet effet, on met de préférence en œuvre le mode de réalisation précité, avec une chambre d'enduction de forme tronconique, et un ou des canaux d'alimentation en composition géopolymère débouchant dans la chambre d'enduction du côté de la grande base du tronc de cône formé par la chambre, ce qui induit une circulation de la composition géopolymère depuis la grande base du tronc de cône vers la petite base (donc de la partie la plus évasée de la chambre vers sa partie la plus resserrée).

Quel que soit le mode exact de mise en œuvre de l'invention, il est préférable que les canaux d'alimentation associés aux moyens d'injection assurent un remplissage permanent de la chambre d'enduction par de la composition géopolymère tout au long du processus d'imprégnation. En effet, la pression exercée par la composition remplissant la chambre permet alors de forcer la pénétration de la composition dans le matériau fibreux, la force de la pression exercée dans ce cadre pouvant être aisément modulée en contrôlant le débit d'injection en composition géopolymère (plus ce débit est élevée, plus intense est la force exercée), ce qui permet de moduler la quantité de composition géopolymère incorporée *in fine* dans le matériau fibreux. La présente invention permet ainsi de contrôler très aisément la quantité de composition géopolymère imprégné, en jouant simplement sur le débit d'injection de la composition. Plus la vitesse de défilement du cœur de câble au sein du dispositif (et donc en particulier au sein de la chambre d'enduction) est élevée et plus le débit devra être important pour assurer un taux d'imprégnation donné, mais l'invention permet dans tous les cas d'obtenir un taux d'imprégnation ciblé et ce quel que soit la vitesse de défilement du cœur de câble à imprégner.

Le matériau fibreux revêtant le cœur de câble est imprégné par la composition géopolymère à un taux d'imprégnation ciblé qui est fonction de la performance de résistance au feu souhaitée pour le câble.

L'imprégnation peut être réalisée de façon à ce que le matériau fibreux revêtant le cœur de câble soit imprégné par la composition géopolymère à un taux d'imprégnation inférieur ou égal à 800 g/m², de préférence à un taux d'imprégnation allant de 575 à 800 g/m², mieux à un taux d'imprégnation allant de 600 à 775 g/m², encore mieux à un taux d'imprégnation allant de 625 à 750 g/m².

Une imprégnation totale du matériau fibreux par la composition géopolymère correspondant à un taux d'imprégnation allant de 900 à 925 g/m², il est à noter qu'un tel taux d'imprégnation inférieur ou égal à 800 g/m² correspond à une imprégnation partielle du matériau fibreux par la composition géopolymère.

Différents aspects et modes de réalisation possibles de l'invention sont décrits plus en détails ci-après.

### Le matériau géopolymère

Le matériau composite géopolymère/matériau fibreux constitutif de la couche isolante résistant au feu que permet d'obtenir l'invention est à base d'un matériau géopolymère.

Au sens de la présente description, le terme de « matériau géopolymère » désigne un matériau solide comprenant du silicium (Si), de l'aluminium (Al), de l'oxygène (O) et au moins un élément choisi parmi le potassium (K), le sodium (Na), le lithium (Li), le césium (Cs) et le calcium (Ca), et de préférence choisi parmi le potassium (K), et le sodium (Na).

Le matériau géopolymère peut notamment être un matériau géopolymère aluminosilicate.

Le matériau géopolymère aluminosilicate peut être choisi parmi les poly(sialates) répondant à la formule (I) Mₙ(-Si-O-Al-O-)ₙ [(M)-PS] et ayant un rapport molaire Si/Al égal à 1, les poly(sialate-siloxos) répondant à la formule (II) Mₙ(-Si-O-Al-O-Si-O-)ₙ [(M)-PPS] et ayant un rapport molaire Si/Al égal à 2, les poly(sialate-disiloxos) répondant à la formule (III) Mᵣ(-Si-O-Al-O-Si-O-Si-O)ₙ [(M)-PSDS] et ayant un rapport molaire Si/Al égal à 3, et d'autres poly(sialates) de rapport Si/Al > 3, les poly(sialates) précités comprenant un cation alcalin M choisi parmi K, Na, Li, Cs et l'un de leurs mélanges, et n désigne le degré de polymérisation.

Le matériau géopolymère est obtenu à partir de la composition géopolymère, en général par séchage, géopolymérisation et/ou polycondensation de ladite composition géopolymère (processus désignés ici par « *durcissement* » de la composition géopolymère).

Une « composition géopolymère », au sens de la présente description, est une composition, généralement liquide, apte à former par durcissement un matériau géopolymère solide. Les ingrédients de la composition géopolymère peuvent donc subir une polycondensation pour former ledit matériau géopolymère.

La formation du matériau géopolymère à partir de la composition géopolymère s'effectue donc par une réaction interne et n'est par exemple pas le résultat d'un simple séchage, comme c'est généralement le cas pour des liants à base de silicates alcalins. En effet, les matériaux géopolymères résultent d'une réaction de polycondensation minérale par activation alcaline, dite géosynthèse, par opposition aux liants traditionnels hydrauliques dans lesquels le durcissement est le résultat d'une hydratation des aluminates de calcium et des silicates de calcium.

### Le matériau fibreux

Le matériau fibreux constitue un autre constituant du composite géopolymère/matériau fibreux constitutif de la couche isolante résistant au feu que permet d'obtenir l'invention. Il s'agit également du matériau qui revêt initialement le cœur de câble introduit dans le dispositif d'imprégnation de l'invention.

Ce matériau fibreux est de préférence un matériau fibré non tissé. Par ailleurs, il a avantageusement une structure souple et flexible.

Ce matériau fibreux, typiquement non tissé, peut notamment être choisi parmi les matériaux cellulosiques, les matériaux à base de polymères organiques synthétiques, les fibres de verre, et un de leurs mélanges, et de préférence parmi les matériaux à base de polymères organiques synthétiques.

Les matériaux cellulosiques peuvent être choisis parmi le papier, en particulier le papier buvard ; les matériaux non tissés fabriqués à partir de cellulose fonctionnalisée ou non fonctionnalisée ; les matrices à structure alvéolaire et/ou fibreuse fabriquées à partir de fibres naturelles d'acétate de cellulose.

Les matériaux à base de polymères organiques synthétiques peuvent être choisis parmi les matériaux polymères à matrice poreuse et/ou fibreuse de polyoléfine(s), en particulier ceux choisis parmi les homo- et copolymères de propylène, les homo- et copolymères d'éthylène, les polyéthylènes haute densité (HDPE), les polyamides aromatiques (aramides), les polyesters, et un de leurs mélanges.

Selon un mode de réalisation intéressant de l'invention, le matériau fibreux non tissé est un polyéthylène téréphtalate (PET).

Le matériau fibreux non tissé présente de préférence un grammage allant de 50 à 120 g/cm² environ. Cela permet ainsi d'obtenir une couche composite suffisamment flexible pour pouvoir être manipulée facilement, et suffisamment robuste pour obtenir une bonne protection au feu.

### La couche composite géopolymère/matériau fibreux obtenue selon l'invention

Cette couche composite, obtenue par l'imprégnation du matériau fibreux par la composition géopolymère dans le dispositif de l'invention puis durcissement de la composition induisant la formation d'un matériau géopolymère intriqué dans les fibres du matériau fibreux, constitue en général une enveloppe continue, typiquement non poreuse, en surface du cœur de câble, propre à être revêtue ultérieurement par d'autres couches de revêtement.

Compte tenu de la mise en oeuvre du dispositif de l'invention, cette couche composite a une épaisseur sensiblement constante, cette épaisseur a en général une valeur allant typiquement de 0,2 à 3 mm environ, par exemple de 0,5 à 1 mm environ.

Le plus souvent, le matériau géopolymère représente de 5 à 98% en poids environ, de préférence de 55 à 95% en poids environ, et de préférence encore de 65 à 90% en poids environ, par rapport au poids total de la couche composite réalisée en employant le dispositif de l'invention.

Par ailleurs, le matériau fibreux non tissé représente en général de 2 à 95% en poids environ, de façon particulièrement préférée de 5 à 45% en poids environ, et encore plus préférentiellement de 10 à 35% en poids environ, par rapport au poids total de la couche composite réalisée en employant le dispositif de l'invention.

### Le cœur de câble

Le cœur de câble sur lequel le dispositif et le procédé de l'invention permettent de déposer une couche isolante résistant au feu à base du matériau composite matériau géopolymère/matériau fibreux est un élément allongé, avantageusement mais pas nécessairement de forme cylindrique à section circulaire.

Ce cœur de câble peut par exemple être un élément conducteur allongé cylindrique éventuellement recouvert d'une couche isolante ou bien encore un ensemble de plusieurs éléments cylindriques (chacun pouvant être revêtu d'une couche isolante), typiquement regroupés en toron pour assurer une section la plus cylindrique possible, et qui peuvent être gainés.

Plus généralement, on peut employer à titre de cœur de câble tout élément interne d'un câble que l'on souhaite recouvrir par une couche isolante à base de matériau composite matériau géopolymère/matériau fibreux, cet élément interne ayant de préférence la forme d'un cylindre de section circulaire. Par exemple, le cœur de câble peut comprendre au moins un élément conducteur allongé cylindrique recouvert par plusieurs revêtements plus internes que la couche isolante à base de matériau composite matériau géopolymère/matériau fibreux. Selon un mode de réalisation spécifique, le cœur de câble peut être un cœur de câble armé, comprenant une armure et, sous cette armure, au moins un élément conducteur allongé revêtu par une couche isolante, typiquement plusieurs éléments conducteurs de ce type.

Le cœur de câble employé dans le dispositif de la présente invention est préalablement revêtu par un matériau fibreux, avantageusement du type précité. Ce revêtement de matériau fibreux autour du cœur de câble est typiquement effectué en employant le matériau fibreux sous la forme d'un ruban, et en revêtant le cœur de câble par un enroulement dudit ruban autour du cœur de câble, préalablement à l'imprégnation dans le dispositif de l'invention.

Cet enroulement préalable du ruban autour du cœur de câble, qui vise à recouvrir le cœur de câble sur l'ensemble de sa longueur, est typiquement effectué :
- selon l'axe longitudinal du cœur de câble, à savoir avec un enroulement du ruban autour du cœur de câble avec l'axe longitudinal du ruban parallèle à l'axe longitudinal du cœur de câble, le ruban étant alors replié autour du cœur de câble dans le sens de sa largeur (le ruban se referme alors sur le cœur de câble avec en général peu de recouvrement des faces du ruban l'une sur l'autre, typiquement avec des zones de recouvrement de de 10 à 20% environ) ; ou bien
- selon un enroulement hélicoïdal, à savoir en enroulant le ruban autour du cœur de câble avec l'axe longitudinal du ruban qui n'est ni parallèle ni perpendiculaire à l'axe longitudinal du cœur de câble, le ruban formant alors autour du cœur de câble une hélice (le ruban revêtant alors le cœur de câble avec en général peu de recouvrement des faces du ruban d'une spire de l'hélice à la suivante typiquement avec des zones de recouvrement de de 10 à 20% environ).

L'enroulement, quel que soit son mode, peut être effectué manuellement ou de façon automatisée, et de préférence de façon automatisée.

Lorsque l'enroulement du ruban autour du cœur de câble est effectué selon l'axe longitudinal du cœur de câble, il est avantageusement mis en œuvre en faisant passer le ruban dans un dispositif de resserrement ou un dispositif de conformation de ruban amorçant son repliement autour du cœur de câble dans le sens de sa largeur (dispositif désigné dans ce qui suit par « trompette »). Le cœur de câble passe alors également dans le dispositif de resserrement, ce qui permet d'enrouler en continu le ruban autour du cœur de câble.

Lorsque l'enroulement du ruban autour du cœur de câble est hélicoïdal, il est avantageusement conduit en enroulant le ruban autour du cœur de câble avec l'axe longitudinal du ruban formant un angle typiquement entre 20 et 70° avec l'axe longitudinal du cœur de câble et en entraînant le câble en rotation et en translation pour assurer l'enroulement continu du ruban sous la forme d'une hélice autour du câble.

### Guidage et défilement du cœur de câble revêtu de matériau fibreux

Les moyens assurant le guidage et le défilement du cœur de câble revêtu de matériau fibreux au sein du dispositif de l'invention sont typiquement des conduits cylindriques ayant une section de même géométrie que le cœur de câble revêtu de matériau fibreux, typiquement une section circulaire lors que le cœur de câble est de section circulaire.

Notamment de façon à éviter des fuites de composition géopolymère hors du dispositif, il est préférable que les conduits cylindriques aient une géométrie et des dimensions ajustées au câble revêtu de matériau fibreux qu'ils véhiculent, avec typiquement, dans le cas de conduits cylindriques de section circulaire, un diamètre sensiblement égal mais très légèrement supérieur à celui du cœur de câble revêtu qu'ils véhiculent, pour permettre le passage du cœur de câble.

A titre de moyens assurant le guidage et le défilement du cœur de câble revêtu de matériau fibreux au sein du dispositif de l'invention, le dispositif comporte typiquement:
- un premier conduit cylindrique s'étendant de l'entrée précitée du dispositif (qui constitue alors aussi l'entrée dudit premier conduit cylindrique) jusqu'à une entrée de la chambre d'enduction ; et
- un second conduit cylindrique, aligné avec le premier conduit cylindrique selon le même axe longitudinal, et s'étendant d'une sortie de la chambre d'enduction jusqu'à la sortie précitée du dispositif.

A noter qu'il peut s'avérer utile que le second conduit cylindrique qui véhicule le cœur de câble sortant de la chambre (et donc revêtu d'un matériau fibreux imprégné de composition géopolymère) ait un diamètre légèrement plus important que le premier conduit cylindrique (destiné lui à véhiculer le cœur de câble revêtu d'un matériau fibreux non encore imprégné.

Lorsque la chambre d'induction a la forme d'un tronc de cône, lesdits premier et second conduits cylindriques ont de préférence des axes longitudinaux confondus avec l'axe dudit tronc de cône. Par ailleurs, le premier conduit cylindrique débouche avantageusement au niveau de la grande base du tronc de cône (en d'autres termes l'entrée de la chambre d'enduction par laquelle pénètre le cœur de câble revêtu de matériau fibreux est située au niveau de cette grande base du tronc de cône) et le second conduit cylindrique démarre au niveau de la petite base du tronc de cône (typiquement la petite base du tronc de cône constitue à la fois l'entrée circulaire du second conduit cylindrique et la sortie de la chambre d'enduction).

Les moyens assurant le guidage et le défilement du cœur de câble revêtu de matériau fibreux au sein du dispositif sont de préférence configurés pour assurer une vitesse de défilement du cœur de câble revêtu de matériau fibreux au sein du dispositif d'au moins 50 mètres/min.

Par exemple, les moyens assurant le guidage et le défilement du cœur de câble revêtu de matériau fibreux au sein du dispositif sont configurés pour assurer une vitesse de défilement du cœur de câble revêtu de matériau fibreux au sein du dispositif allant de 50 à 120 mètres/min, mieux de 80 à 120 mètres/min, encore mieux de 90 à 110 mètres/min. Par exemple, la vitesse de défilement du cœur de câble revêtu de matériau fibreux au sein du dispositif est de l'ordre de 100 mètres/min.

### Moyens permettant l'injection de la composition géopolymère dans la chambre d'enduction

L'injection continue de la composition géopolymère dans la chambre d'enduction est réalisée à un débit contrôlé qui est fonction de la vitesse de défilement du cœur de câble et du taux d'imprégnation ciblé.

Les moyens permettant l'injection de la composition géopolymère dans la chambre d'enduction sont de préférence configurés pour assurer l'injection de la composition géopolymère dans la chambre d'enduction en continu et avec un débit contrôlé allant de 3 à 4 kg/min. Par exemple, l'injection continue de la composition géopolymère dans la chambre d'enduction est réalisée à un débit contrôlé de l'ordre de 3,5 kg/min.

### La composition géopolymère injectée dans la chambre d'enduction

La composition géopolymère employée pour imprégner le matériau fibreux au sein du dispositif de l'invention est en général une composition géopolymère liquide.

La composition géopolymère présente de préférence une viscosité à 25°C d'au moins 0,5 Pa.s, mieux une viscosité à 25°C allant de 0,5 à 20 Pa.s, et encore mieux une viscosité à 25°C allant de 0,5 à 5 Pa.s.

La viscosité de la composition géopolymère est mesurée à 25°C à l'aide d'un rhéomètre ARES (Société TA INSTRUMENTS) en appliquant une vitesse angulaire de 5 rad/s et une amplitude de contrainte de 1%. La mesure est réalisée en utilisant le mode dynamique de balayage en temps en appliquant une force statique constante.

La composition géopolymère est de préférence aqueuse.

La composition géopolymère présente de préférence une densité allant de 1,4 à 1,8, mieux de 1,5 à 1,7. Par exemple, la densité de la composition géopolymère est de l'ordre de 1,6.

Cette composition est convoyée dans la chambre d'enduction *via* au moins un canal relié à des moyens d'injection de ladite composition géopolymère permettant une injection en continu et avec un débit contrôlé. Typiquement, on peut employer à cet effet une pompe à débit régulé et de préférence à débit réglable, par exemple une pompe à engrenage, injectant la composition géopolymère au niveau d'au moins une deuxième entrée distincte de l'entrée permettant l'introduction du cœur de câble et véhiculée par ledit canal jusqu'à la chambre d'enduction. Les figures ci-jointe illustre en détails un mode de réalisation possible de ce type d'alimentation de la chambre d'enduction.

Quel que soit son mode d'introduction dans le dispositif de l'invention, la composition géopolymère employée est de préférence une composition géopolymère aluminosilicate.

La composition géopolymère de l'invention est de façon particulièrement préférée une composition géopolymère comprenant de l'eau, du silicium (Si), de l'aluminium (Al), de l'oxygène (O), et au moins un élément choisi parmi le potassium (K), le sodium (Na), le lithium (Li), le césium (Cs), et le calcium (Ca), et de préférence choisi parmi le potassium (K) et le sodium (Na).

La composition géopolymère peut en particulier comprendre au moins un premier aluminosilicate, au moins un premier silicate alcalin, de l'eau, et éventuellement une base alcaline.

### Le premier aluminosilicate

Le premier aluminosilicate peut être choisi parmi les métakaolins (i.e. kaolins calcinés), les cendres volantes (bien connues sous l'anglicisme « *fly ash* »), le laitier de haut fourneau (bien connu sous l'anglicisme « *blast furnace slag* »), les argiles gonflantes telles que la bentonite, les argiles calcinées, tout type de composé comprenant de l'aluminium et de la fumée de silice, les zéolithes, et un de leurs mélanges.

Parmi ces composés, les métakaolins sont préférés, notamment ceux commercialisés par la société Imérys.

Dans l'invention, l'expression « métakaolin » signifie un kaolin calciné ou un aluminosilicate déshydroxylé. Il est de préférence obtenu par déshydratation d'un kaolin ou d'une kaolinite.

La composition géopolymère peut comprendre de 5 à 50% en poids environ d'aluminosilicate, et de préférence de 10 à 35% en poids environ d'aluminosilicate, par rapport au poids total de la composition géopolymère.

La composition géopolymère peut comprendre en outre un deuxième aluminosilicate différent du premier aluminosilicate.

De préférence, la composition géopolymère comprend deux kaolins calcinés ayant des températures de calcination différentes.

Selon une forme de réalisation particulièrement préférée de l'invention, la composition géopolymère comprend un premier métakaolin choisi parmi les kaolins calcinés à une température T_{c1} d'au moins 650°C environ, et un deuxième métakaolin choisi parmi les kaolins calcinés à une température T_{c2} telle que T_{c2} - T_{c1} ≥ 100°C environ, au moins un premier silicate alcalin, de l'eau, et éventuellement une base alcaline. La composition géopolymère peut alors présenter des propriétés mécaniques améliorées, notamment en termes de flexibilité et de durabilité, tout en garantissant de bonnes propriétés de réaction et de résistance au feu.

Selon une forme de réalisation de l'invention, le premier métakaolin est un kaolin calciné à une température T_{c1} d'au moins 700°C environ, et de préférence d'au moins 725°C environ.

Selon une forme de réalisation préférée de l'invention, le premier métakaolin est un kaolin calciné à une température T_{c1} d'au plus 875°C environ, et de préférence d'au plus 825°C environ.

Le premier métakaolin peut comprendre au moins 20% en mole environ, et de préférence au moins 30% en mole environ d'oxyde d'aluminium (Al₂O₃), par rapport au nombre de moles total du premier métakaolin.

Le premier métakaolin peut comprendre au plus 60% en mole environ, et de préférence au plus 50% en mole environ d'oxyde d'aluminium (Al₂O₃), par rapport au nombre de moles total du premier métakaolin.

Le premier métakaolin peut comprendre au moins 35% en mole environ, et de préférence au moins 45% en mole environ d'oxyde de silicium (SiO₂), par rapport au nombre de moles total du premier métakaolin.

Le premier métakaolin peut comprendre au plus 75% en mole environ, et de préférence au plus 65% en mole environ d'oxyde de silicium (SiO₂), par rapport au nombre de moles total du premier métakaolin.

À titre d'exemples de premier métakaolin, on peut citer les métakaolins vendus par la société Imérys, notamment celui commercialisé sous la référence PoleStar^{®} 450.

Le premier métakaolin peut être choisi parmi les kaolins calcinés à T_{c1} telle que définie dans l'invention, pendant au moins 1 min environ, de préférence pendant au moins 10 min environ, de façon particulièrement préférée pendant une durée allant d'environ 30 min à 8h, et de façon plus particulièrement préférée pendant une durée allant d'environ 2h à 6h.

Le deuxième métakaolin est choisi de préférence parmi les kaolins calcinés à une température T_{c2} telle que T_{c2} - T_{c1} ≥ 150°C environ, de façon particulièrement préférée telle que T_{c2} - T_{c1} ≥ 200°C environ, et de façon plus particulièrement préférée telle que T_{c2} - T_{c1} ≥ 250°C environ.

Selon une forme de réalisation de l'invention, le deuxième métakaolin est un kaolin calciné à une température T_{c2} d'au moins 800°C environ, de préférence d'au moins 850°C environ, et de façon particulièrement préférée d'au moins 900°C environ.

Selon une forme de réalisation préférée de l'invention, le deuxième métakaolin est un kaolin calciné à une température T_{c2} d'au plus 1200°C environ, et de préférence d'au plus 1150°C environ.

Le deuxième métakaolin peut comprendre au moins 20% en mole environ, et de préférence au moins 30% en mole environ d'oxyde d'aluminium (Al₂O₃), par rapport au nombre de moles total du deuxième métakaolin.

Le deuxième métakaolin peut comprendre au plus 60% en mole environ, et de préférence au plus 50% en mole environ d'oxyde d'aluminium (Al₂O₃), par rapport au nombre de moles total du deuxième métakaolin.

Le deuxième métakaolin peut comprendre au moins 35% en mole environ, et de préférence au moins 45% en mole environ d'oxyde de silicium (SiO₂), par rapport au nombre de moles total du deuxième métakaolin.

Le deuxième métakaolin peut comprendre au plus 75% en mole environ, et de préférence au plus 65% en mole environ d'oxyde de silicium (SiO₂), par rapport au nombre de moles total du deuxième métakaolin.

À titre d'exemples de deuxième métakaolin, on peut citer les métakaolins vendus par la société Imérys, notamment celui commercialisé sous la référence PoleStar^{®} 200R.

Le deuxième métakaolin peut être choisi parmi les kaolins calcinés à T_{c2} telle que définie dans l'invention, pendant au moins 1 min environ, de préférence pendant au moins 5 min environ, de façon particulièrement préférée pendant une durée allant d'environ 10 min à 2h, et de façon plus particulièrement préférée pendant une durée allant d'environ 15 min à 1h.

Le rapport massique [premier métakaolin/deuxième métakaolin] dans la composition géopolymère va de préférence de 0,1 à 2 environ, de façon particulièrement préférée de 0,5 à 1,0 environ, et de façon plus particulièrement préférée est d'environ 1.

La composition géopolymère peut comprendre de 5 à 50% en poids environ, et de préférence de 10 à 35% en poids environ de premier et deuxième métakaolins, par rapport au poids total de la composition géopolymère.

### Le premier silicate alcalin

Le premier silicate alcalin peut être choisi parmi les silicates de sodium, les silicates de potassium, et l'un de leurs mélanges.

Les silicates alcalins commercialisés par la société Silmaco ou par la société PQ corporation sont préférés. Le premier silicate alcalin est de préférence un silicate de sodium.

Le premier silicate alcalin peut avoir un rapport molaire SiO₂/M₂O allant de 1,1 à 35 environ, de préférence de 1,3 à 10 environ, et de façon particulièrement préférée de 1,4 à 5 environ, avec M étant un atome de sodium ou de potassium, et de préférence un atome de sodium.

La composition géopolymère peut comprendre de 5 à 60% en poids environ, et de préférence de 10 à 50% en poids environ de premier silicate alcalin, par rapport au poids total de la composition géopolymère.

### Le deuxième silicate alcalin

La composition géopolymère peut comprendre en outre un deuxième silicate alcalin différent du premier silicate alcalin.

Le deuxième silicate alcalin peut être choisi parmi les silicates de sodium, les silicates de potassium, et l'un de leurs mélanges. Les silicates alcalins commercialisés par la société Silmaco ou par la société PQ Corporation sont préférés. Le deuxième silicate alcalin est de préférence un silicate de sodium.

Les premier et deuxième silicates alcalins peuvent avoir respectivement des rapports molaires SiO₂/M₂O et SiO₂/M'₂O tels que M et M', identiques, sont choisis parmi un atome de sodium et un atome de potassium, et de préférence un atome de sodium, et lesdits rapports ont des valeurs différentes, de préférence des valeurs telles que leur différence est d'au moins 0,3, de façon particulièrement préférée telles que leur différence est d'au moins 0,5, et de façon plus particulièrement préférée telles que leur différence est d'au moins 1,0.

Selon une forme de réalisation de l'invention, la composition géopolymère comprend :
- un premier silicate alcalin ayant un rapport molaire SiO₂/M₂O allant de 1,5 à 2,6 environ, et
- un deuxième silicate alcalin ayant un rapport molaire SiO₂/M'₂O supérieur à 2,6, de préférence allant de 2,8 à 4,5 environ, et de façon particulièrement préférée allant de 3,0 à 4,0 environ, étant entendu que M' est identique à M.

La composition géopolymère peut comprendre de 10 à 60% en poids environ, et de préférence de 20 à 50% en poids environ de premier et deuxième silicates alcalins, par rapport au poids total de la composition géopolymère.

Le rapport massique [premier silicate alcalin/deuxième silicate alcalin] dans la composition géopolymère va de préférence de 0,5 à 2,5, et de façon particulièrement préférée de 0,8 à 2,0.

### La base alcaline

La base alcaline peut être de l'hydroxyde de sodium, ou de l'hydroxyde de potassium, et de préférence de l'hydroxyde de sodium.

La composition géopolymère peut être exempte de base alcaline. Cela permet ainsi d'améliorer la manipulation de la composition géopolymère, en particulier lors de la préparation d'un câble.

Le rapport massique matières solides/eau dans ladite composition géopolymère détermine la cinétique de solidification (prise) de la composition.

La composition géopolymère peut comprendre de 35% à 80% en poids environ, et de façon particulièrement préférée de 40% à 70% en poids environ, de matières solides (silicate alcalin(s), aluminosilicate(s) et base alcaline), par rapport au poids total de ladite composition géopolymère.

La composition géopolymère peut comprendre en outre un ou plusieurs additifs choisis parmi:
- un colorant,
- des fibres minérales, notamment choisies parmi les fibres d'alumine,
- un additif à structure polymère, notamment choisi parmi les fibres de polyoléfine telles que les fibres de polypropylène, de polyéthylène haute densité (HDPE), les aramides, et les fibres techniques de verre enduites de silicone ou d'un polymère organique de type polyéthylène ; un copolymère de styrène-butadiène (SBR) ; un copolymère de styrène-butadiène-éthylène (EBS) ; les dérivés des copolymères de styrène-éthylène, notamment ceux commercialisés par Kraton tels qu'un copolymère de styrène-éthylène-butylène-styrène (SEBS), un copolymère de styrène-butadiène-styrène (SBS), un copolymère de styrène-isoprène-styrène (SIS), un copolymère de styrène-propylène-éthylène (EPS) ou un copolymère de styrène-éthylène-propylène-styrène (SEPS) ; un copolymère d'éthylène et d'acétate de vinyle (EVA), un polyorganosiloxane réticulé (e.g. à l'aide d'un peroxyde) ; du polyéthylène éventuellement sous forme de poudre ; des lignosulfonates ; de l'acétate de cellulose ; d'autres dérivés de la cellulose ; une huile silicone de faible viscosité (e.g. de l'ordre de 12500 cPo) ; et une huile polyéthylène,
- un composé accélérant la prise en masse, notamment choisi parmi le sulfate d'aluminium, les aluns (e.g. sulfate double d'aluminium et de potassium), le chlorure de calcium, le sulfate de calcium, le sulfate de calcium hydraté, l'aluminate de sodium, le carbonate de sodium, le chlorure de sodium, le silicate de sodium, le sulfate de sodium, le chlorure de fer (III), et les lignosulfonates de sodium,
- un agent retardant la prise en masse, notamment choisi parmi l'ammonium, les métaux alcalins, les métaux alcalino-terreux, le borax, les lignosulfonates et en particulier les sels de métaux de lignosulfonates de calcium, les celluloses telles que la carboxyméthyl hydroéthyl cellulose, les lignines sulfoalkylées telles que par exemple la lignine sulfométhylée, les acides hydroxycarboxyliques, les copolymères de sels d'acide 2-acrylamido-2-méthylpropane sulfonique et d'acide acrylique ou d'acide maléique, et les sels saturés,
- une charge inerte, notamment choisi parmi le talc, les micas, les argiles déshydratées, et le carbonate de calcium,
- un amidon,
- un plastifiant de l'amidon, notamment choisi parmi un stéarate de métal, un polyéthylène glycol, un éthylène glycol, un polyol comme le glycérol, le sorbitol, le mannitol, le maltitol, le xylitol ou un oligomère de l'un de ces polyols, un sucrose comme le glucose ou le fructose, un plastifiant contenant des groupes amides, et tout type de plastifiant à base de polysaccharide(s) modifié(s),
- un dérivé de la cellulose,
- un matériau carboné expansé tel qu'un graphite expansé.

Le colorant est de préférence un colorant liquide à température ambiante (i.e. à 18-25°C).

La composition géopolymère peut comprendre de 0,01 à 15% en poids environ d'additif(s), et de préférence de 0,5 à 8% en poids environ d'additif(s), par rapport au poids total de la composition géopolymère.

### La préparation de la composition géopolymère

Une composition géopolymère utile selon l'invention peut typiquement être préparé selon une étape (E) de mélange dudit premier aluminosilicate avec ledit premier silicate alcalin, l'eau, et éventuellement la base alcaline.

Cette étape de mélange est généralement effectuée à un pH élevé, notamment variant de 10 à 13.

Cette étape de mélange comprend de préférence les sous-étapes suivantes :
(E₁) préparation d'une solution aqueuse du premier silicate alcalin ; et
(E₂) mélange du premier aluminosilicate sous forme de poudre avec la solution aqueuse de silicate alcalin préparée à la sous-étape (E₁).

La solution aqueuse du premier silicate alcalin peut être préparée en mélangeant du dioxyde de silicium SiO₂ ou un silicate alcalin avec une base MOH dans laquelle M est K ou Na.

Le dioxyde de silicium SiO₂ peut être choisi parmi la fumée de silice (i.e. silice pyrogénée), le quartz, et leurs mélanges.

La sous-étape (E₁) peut être effectuée en dissolvant la base dans de l'eau, entraînant un dégagement de chaleur (réaction exothermique), puis en ajoutant la silice (ou le silicate alcalin). La chaleur dégagée accélère alors la dissolution de la silice (ou du silicate alcalin) lors de la sous-étape (E₁), et du premier aluminosilicate lors de la sous-étape (E₂).

Lorsqu'on emploie un deuxième aluminosilicate et/ou un deuxième silicate alcalin, l'étape (E) de préparation de la composition géopolymère peut comprendre le mélange dudit premier aluminosilicate et éventuellement dudit deuxième aluminosilicate, avec ledit premier silicate alcalin, éventuellement ledit deuxième silicate alcalin, de l'eau, et éventuellement la base alcaline.

L'étape (E) comprend de préférence le mélange des premier et deuxième métakaolins, avec le premier silicate alcalin et éventuellement le deuxième silicate alcalin, de l'eau, et éventuellement une base alcaline.

Selon une forme de réalisation préférée, l'étape (E) comprend les sous-étapes suivantes :
(Ea) mélange des premier et deuxième silicates alcalins, notamment sous agitation ;
(Eb) éventuel ajout d'une base alcaline, notamment en maintenant l'agitation ; et
(Ec) l'ajout des premier et deuxième métakaolins, notamment en maintenant l'agitation.

À l'issue de l'étape (E), notamment à l'issue de la sous-étape (E2) ou (E c) lorsqu'elles sont mises en œuvre, on obtient préférentiellement une solution fluide et homogène.

À l'issue de l'étape (E), la composition géopolymère peut comprendre de 35% à 80% en poids environ, et de façon particulièrement préférée de 40% à 70% en poids environ, de matières solides (silicate alcalin(s), aluminosilicate(s) et base alcaline), par rapport au poids total de ladite composition géopolymère.

Un tel rapport massique permet d'avoir une composition géopolymère assez fluide pour permettre sa manipulation, et dont la cinétique de solidification est assez lente pour permettre la formation d'une couche de câble telle que définie ci-après.

Le rapport massique matières solides/eau dans ladite composition géopolymère peut permettre de déterminer la cinétique de solidification de ladite composition géopolymère.

Après l'étape (E) de préparation de la composition géopolymère, et avant son imprégnation sur le matériau fibreux, la composition géopolymère peut éventuellement être chauffée, notamment à une température allant de 55°C à 95°C environ, par exemple entre 70°C à 90°C environ. Ce chauffage peut faciliter l'étape d'imprégnation. Le cas échéant, il convient néanmoins de contrôler les conditions de chauffage, qui, trop drastiques peuvent induire des phénomènes de polymérisation et de prise en masse.

### Gaine externe de protection

De préférence, la couche composite à base de géopolymère qui est obtenue autour du cœur de câble suite à la mise en œuvre du dispositif de l'invention est une couche interne du câble selon l'invention.

Selon l'invention, on entend par « couche interne », une couche qui ne constitue pas la couche la plus externe du câble.

Avantageusement, une gaine externe de protection est déposée autour de la couche composite obtenue selon l'invention. La gaine externe de protection peut notamment permettre d'assurer l'intégrité mécanique de la couche composite.

L'application de cette gaine de protection autour de la composition composite peut typiquement être effectuée par extrusion, notamment à une température allant de 140°C à 195°C environ.

### Câble

La présente invention a encore pour objet un câble, notamment d'énergie ou de télécommunication, comprenant au moins une couche isolante résistante au feu obtenue par imprégnation partielle, notamment en ligne, d'au moins un matériau fibreux, notamment non tissé, par une composition géopolymère, notamment aqueuse, notamment à l'aide du dispositif tel que décrit ci-dessus.

De préférence, la couche isolante résistante au feu est obtenue par imprégnation partielle du matériau fibreux par la composition géopolymère à un taux d'imprégnation inférieur ou égal à 800 g/m², de préférence à un taux d'imprégnation allant de 575 à 800 g/m², mieux à un taux d'imprégnation allant de 600 à 775 g/m², encore mieux à un taux d'imprégnation allant de 625 à 750 g/m².

### Brève description des dessins

Les dessins annexés illustrent un modes de réalisation possibles de l'invention :
[Fig. 1] La Figure 1 représente une vue schématique en coupe d'un dispositif d'imprégnation selon l'invention.
[Fig. 2] La Figure 2 est une vue schématique en coupe éclatée du même dispositif
[Fig. 3] La Figure 3 est la même vue schématique mais en perspective
[Fig. 4] La Figure 4 est une vue schématique du dispositif de la Figure 1, en action avec introduction d'un cœur de câble revêtu d'un matériau fibreux, illustrant le procédé de l'invention

Seuls les éléments essentiels pour la compréhension de l'exposé ont été représentés de manière schématique sur ces figures, sans respect de l'échelle.

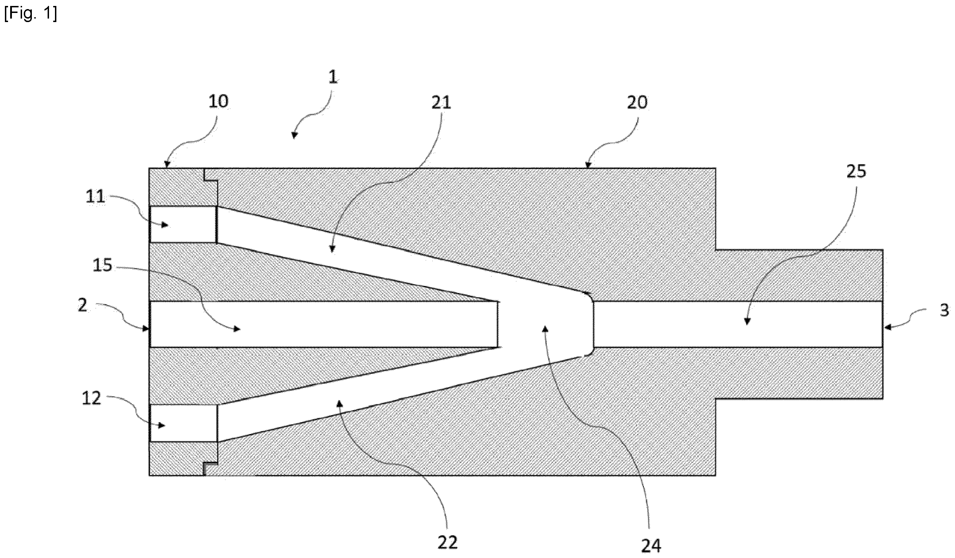

**La** **Figure 1** est une vue schématique en coupe d'un dispositif d'imprégnation 1 selon l'invention. Ce dispositif, de forme globalement cylindrique, comporte une entrée 2 et une sortie 3 permettant respectivement l'entrée et la sortie d'un cœur de câble revêtu par un matériau fibreux destiné à être imprégné de composition géopolymère au sein du dispositif.

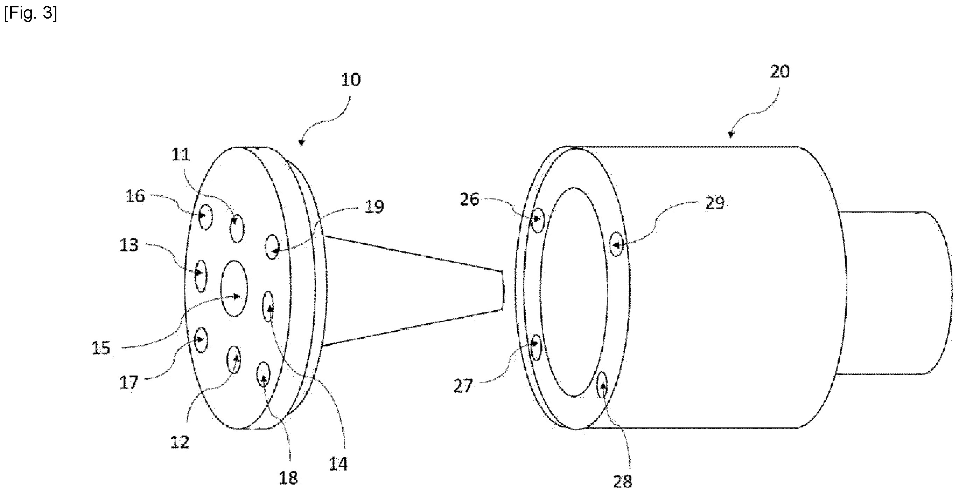

Le dispositif est formé par deux pièces emboitées et solidarisées entre elles par des vis (non représentées sur la Figure 1, car en dehors du plan de coupe), à savoir :
- **une première pièce 10** ayant la forme d'un tronc de cône posé sur une base cylindrique et dotée :
   (i) d'entrées percées dans sa base cylindrique, parmi lesquelles les entrées 11 et 12 sont visibles dans le plan de coupe (d'autres entrées similaires 13 et 14 sont visibles sur la figure 3 en perspective). Ces entrées sont des conduits cylindriques débouchant de part et d'autre de la base de la pièce 10 et qui permettent l'introduction de composition géopolymère au sein du dispositif 1. A cet effet, les entrées 11 à 14 sont reliés à des moyens d'injection de composition polymère (pompe d'injection, non représentée, assurant une injection continue à débit constant) ; et
   (ii) d'un conduit cylindrique 15 pour le guidage du cœur de câble, percé dans le corps de la pièce 10 selon l'axe du tronc de cylindre et de la base, qui débute avec l'entrée 2 du dispositif et s'étend le long de la pièce 2 en traversant la base et toute la partie tronconique ;
      et
- **une seconde pièce 20,** ayant la forme de deux cylindres accolés, le plus gros cylindre (à gauche sur la figure) présentant un évidement de forme tronconique plus large que le tronc de cône de la pièce 10, ménageant ainsi un espace interne entre les pièces 10 et 20, cet espace comprenant :
- des canaux 21 et 22 en connexion fluide respectivement avec les entrées 11 et 12 de la pièce 10 et donc propres à véhiculer la composition géopolymère introduite dans le dispositif ; et
- un espace tronconique 24 formant une chambre d'enduction selon l'invention. Au niveau de la petite base de cet espace tronconique, un conduit cylindrique 25 est creusé, dont l'axe longitudinal est aligné avec l'axe longitudinal du conduit cylindrique 15 de la pièce 10 et qui se termine au niveau de la sortie 3 du dispositif, ce qui le rend propre à assurer la continuité du guidage et du défilement du cœur de câble depuis l'espace tronconique 24 (chambre d'enduction) vers la sortie 3.

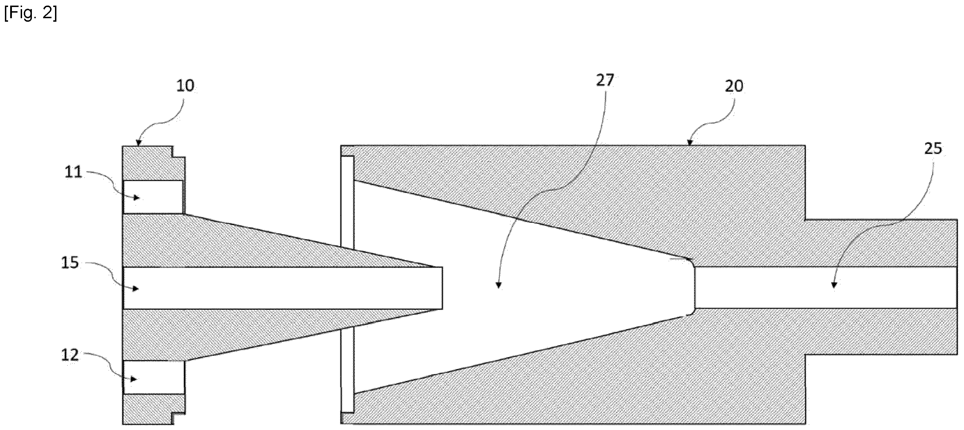

**La** **Figure 2** présente les deux pièces 10 et 20 de la Figure 1, mais désolidarisées (dans leur état avant le montage du dispositif et solidarisation des deux pièces par des vis). Cette figure fait apparaître plus nettement l'évidement tronconique 27 présent dans la pièce 20.

**La** **figure 3** présente les deux pièces 10 et 20 désolidarisées de la même façon que sur la figure précédente, mais selon une représentation en perspective. Cette vue en perspective permet de visualiser l'ensemble des entrées 11,12,13 et 14 sur la pièce 20. Elle fait également apparaître les orifices 16, 17, 18, 19 sur la pièce 10 et les orifices filetés 26, 27,28 et 29 sur la pièce 20 qui permettent la solidarisation des pièces 10 et 20 par vissage.

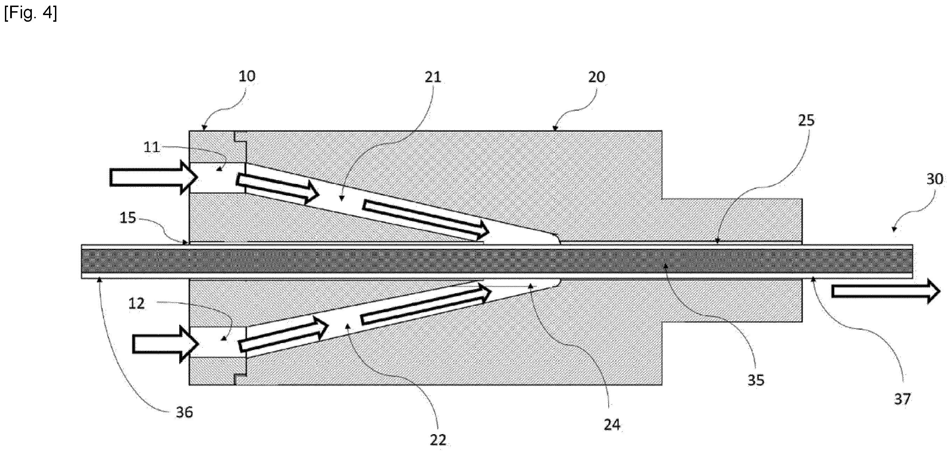

**La** **Figure 4** illustre le mode de fonctionnement du dispositif de l'invention.

On y voit un ensemble 30 comportant un cœur de câble cylindrique de section circulaire 35 revêtu par un matériau fibreux 36, introduit dans le dispositif *via* le conduit circulaire 15, ajusté au diamètre de l'ensemble 30. Lors de la mise en oeuvre du procédé de l'invention, ce cœur de câble revêtu défile de la gauche vers la droite comme indiqué par la flèche à l'extrême droite de la figure.

Après avoir été véhiculé dans le conduit 15, une portion donné du câble en mouvement est conduite dans l'espace interne tronconique 24 formant la chambre d'enduction du dispositif.

Le flux de composition géopolymère, figuré par les flèches à gauche sur la figure vient alimenter la chambre en continu, avec un flux dans le même sens que le déplacement du câble et un remplissage constant de cet espace interne 34, ce qui assure une imprégnation optimale du matériau fibreux.

Chaque portion de câble ainsi imprégnée par la composition géopolymère continue ensuite son déplacement dans le dispositif en passant par le second conduit cylindrique 25 qui véhicule le cœur de câble 35 désormais revêtu d'un matériau fibreux imprégné 37 jusqu'à la sortie du dispositif.

## Revendications

1. Dispositif (1) adapté pour l'imprégnation d'une composition géopolymère sur un matériau fibreux (36) revêtant un cœur de câble (35), comprenant :
- des moyens assurant le guidage et le défilement du cœur de câble revêtu de matériau fibreux (30) au sein du dispositif, depuis une entrée (2) dudit dispositif jusqu'à une sortie (3) dudit dispositif ; et
- entre ladite entrée (2) et ladite sortie (3), une chambre d'enduction (24) munie d'au moins un canal d'alimentation en composition géopolymère(11, 12, 21, 22) relié à des moyens permettant l'injection de composition géopolymère dans ladite chambre en continu et avec un débit contrôlé.

2. Dispositif selon la revendication 1 où la chambre d'enduction (24) a sensiblement la forme d'un tronc de cône, avec ladite entrée (2) du dispositif du côté de la grande base du tronc de cône, et ladite sortie (3) du dispositif du côté de la petite base .

3. Dispositif selon la revendication 2 où le ou les canaux d'alimentation en composition géopolymère (11, 12, 21, 22) débouchent dans la chambre d'enduction du côté de la grande base du tronc de cône.

4. Dispositif selon l'une des revendications 1 à 3, où les moyens assurant le guidage et le défilement du cœur de câble revêtu de matériau fibreux au sein du dispositif sont des conduits cylindriques (15, 25) ayant une section de même géométrie que le cœur de câble revêtu de matériau fibreux.

5. Dispositif selon la revendication 4, comportant, à titre de moyens assurant le guidage et le défilement du cœur de câble revêtu de matériau fibreux au sein du dispositif:
- un premier conduit cylindrique (15) s'étendant de l'entrée précitée du dispositif jusqu'à une entrée de la chambre d'enduction ; et
- un second conduit cylindrique (25), aligné avec le premier conduit cylindrique selon le même axe longitudinal, et s'étendant d'une sortie de la chambre d'enduction jusqu'à la sortie précitée du dispositif.

6. Dispositif selon l'une des revendications 1 à 5, où les canaux d'alimentation associés aux moyens d'injection assurent un remplissage permanent de la chambre d'enduction par de la composition géopolymère.

7. Dispositif selon l'une quelconque des revendications précédentes, les moyens assurant le guidage et le défilement du cœur de câble revêtu de matériau fibreux au sein du dispositif étant configurés pour assurer une vitesse de défilement du cœur de câble revêtu de matériau fibreux au sein du dispositif allant de 80 à 120 mètres/min, de préférence de 90 à 110 mètres/min.

8. Dispositif selon l'une quelconque des revendications précédentes, les moyens permettant l'injection de la composition géopolymère dans la chambre d'enduction étant configurés pour assurer l'injection de la composition géopolymère dans la chambre d'enduction en continu et avec un débit contrôlé allant de 3 à 4 kg/min.

9. Utilisation du dispositif selon l'une des revendications 1 à 8, pour effectuer l'imprégnation d'une composition géopolymère sur un matériau fibreux revêtant un cœur de câble.

10. Procédé de fabrication d'un câble comprenant au moins une couche isolante résistante au feu à base d'un matériau composite comprenant au moins un matériau géopolymère et au moins un matériau fibreux, typiquement non tissé, comprenant :
- une étape d'imprégnation par une composition géopolymère d'un cœur de câble revêtu par un matériau fibreux,
- une étape de durcissement de la composition géopolymère pour former ladite couche isolante résistante au feu à base dudit matériau composite, **caractérisée en ce que** l'étape d'imprégnation est effectuée dans un dispositif d'imprégnation tel que défini dans les revendications 1 à 8.

11. Procédé de fabrication selon la revendication 10, où la composition géopolymère est une composition aqueuse ayant une viscosité à 25°C d'au moins 0,5 Pa.s, mieux une viscosité à 25°C allant de 0,5 à 20 Pa.s, et encore mieux une viscosité à 25°C allant de 0,5 à 5 Pa.s.

12. Procédé de fabrication selon la revendication 10 ou 11, où la composition géopolymère comporte de 35% à 80% en poids, de préférence de 40% à 70% en poids, de matières solides, par rapport au poids total de la composition géopolymère.

13. Procédé de fabrication selon l'une quelconque des revendications 10 à 12, l'étape d'imprégnation étant réalisée de façon à ce que le matériau fibreux revêtant le cœur de câble soit imprégné par la composition géopolymère à un taux d'imprégnation inférieur ou égal à 800 g/m², de préférence à un taux d'imprégnation allant de 575 à 800 g/m², mieux à un taux d'imprégnation allant de 600 à 775 g/m², encore mieux à un taux d'imprégnation allant de 625 à 750 g/m².

14. Câble, notamment d'énergie ou de télécommunication, comprenant au moins une couche isolante résistante au feu obtenue par imprégnation partielle, notamment en ligne, d'au moins un matériau fibreux, notamment non tissé, par une composition géopolymère, notamment à l'aide du dispositif selon l'une quelconque des revendications 1 à 8.

15. Câble selon la revendication 14, la couche isolante résistante au feu étant obtenue par imprégnation partielle du matériau fibreux par la composition géopolymère à un taux d'imprégnation inférieur ou égal à 800 g/m², de préférence à un taux d'imprégnation allant de 575 à 800 g/m², mieux à un taux d'imprégnation allant de 600 à 775 g/m², encore mieux à un taux d'imprégnation allant de 625 à 750 g/m².
